# EUROPÄISCHE PATENTSCHRIFT

(11) **EP 1 539 622 B1**
(45) Veröffentlichungstag und Bekanntmachung des Hinweises auf die Patenterteilung: **07.06.2006**
(21) Anmeldenummer: 03797162.9
(22) Anmeldetag: 02.08.2003
(51) Int. Cl.: B65G 53/56

(54) **WEICHE, INSBESONDERE ZUM VERZWEIGEN VON SCHÜTTGUTSTRÖMEN**
SWITCH, ESPECIALLY FOR BRANCHING OFF BULK MATERIAL FLOWS
DISPOSITIF DE BIFURCATION, SERVANT NOTAMMENT A FAIRE BIFURQUER DES FLUX DE MATIERES EN VRAC

(30) Priorität: 12.09.2002 DE 10242499
(43) Veröffentlichungstag der Anmeldung: 15.06.2005
(73) Patentinhaber: Zeppelin Silos & Systems GmbH, 88045 Friedrichshafen (DE)
(72) Erfinder: MÜLLER, Robert, 88718 Daisendorf (DE); VOGELSANG, Franz-Josef, 88214 Ravensburg (DE)
(74) Vertreter: Roth, Klaus
(86) Internationale Anmeldenummer: PCT/DE2003/002605
(87) Internationale Veröffentlichungsnummer: WO 2004/026740

(56) Entgegenhaltungen:
- EP-A- 1 236 664
- DE-A- 3 007 286
- DE-A- 19 702 215
- DE-A- 19 952 435
- DE-C- 968 047
- GB-A- 2 198 500

## Beschreibung

Die Erfindung betrifft eine Weiche und insbesondere eine Einkanalweiche zum Verzweigen von Schüttgutströmen mit einem in einem stationären, vorzugsweise drei Anschlussöffnungen umfassenden Gehäuse angeordneten Drehküken nach dem Oberbegriff des Anspruchs 1.

### Stand der Technik

Es sind bereits zahlreiche unterschiedliche Varianten von Weichen und insbesondere Einkanalweichen bzw. Kükenrohrweichen bekannt. Sie haben im Allgemeinen die Aufgabe, das zu fördernde Schüttgut durch Umlenkung der Förderrichtung verschiedenen Rohrleitungen zuzuführen, wobei insbesondere ein Fördergas zur Beförderung des Schüttgutes verwendet wird.

Bei einer entsprechenden Weiche gemäß der Druckschrift DE 39 22 240 C2 wird ein zylindrisches Drehküken verwendet, bei dem durch die Verstellung bzw. Verdrehung von einer ersten in eine zweite Position die Eintritts- und die Austrittsseite des Durchgangskanals vertauscht wird. In diesem Fall wird der Durchgangskanal des Drehkükens in der zweiten Position entgegen der Strömungsrichtung des Förderfluids in der ersten Position durchströmt. Der Durchgangskanal ist im Wesentlichen senkrecht zur Drehachse des zylindrischen Drehkükens angeordnet und weist häufig einen nahezu runden freien Querschnitt auf.

Bei entsprechenden Einkanalweichen können je nach Länge des Förderwegs nach der Umlenkung bzw. nach der Weiche zum Teil erhebliche Druckdifferenzen zwischen den beiden Abgangskanälen auftreten. Üblicherweise weisen entsprechende Weichen elastische Dichtungen auf, um auftretende Leckagen zu minimieren. Hierbei hängen die Leckagen unter anderem vom Druck des Förderfluids bzw. Transportgases im Vergleich zum atmosphärischen Umgebungsdruck als auch von den oben erwähnten Druckdifferenzen zwischen den Abgangskanälen ab.

Entsprechende Dichtungen können im Weichengehäuse oder im Drehküken untergebracht werden. Beispielsweise sind diese als aufblasbare Dichtungen oder als statische Dichtungen insbesondere mit einer speziellen Profilform versehen ausgebildet, die sich beim Druckaufbau in der Förderleitung selbsttätig an den Gegenkörper anpressen.

Die Druckschrift DE 199 52 435 Al offenbart eine Schüttgutweiche mit einem Eingangskanal und mindestens zwei Ausgangskanälen, wobei mit Hilfe eines Drehkükens der Eingangskanal wahlweise mit einem der Ausgangskänäle verbindbar ist. Zur Abdichtung umfasst das Drehküken eine Elastomerdichtung.

Daneben sind auch Weichen mit einer Klappe bekannt (vgl. DE 96 80 47). Im Unterschied zu Drehküken, weisen Klappen zwei voneinander getrennte Durchgangsbereiche auf, um wahlweise den Einlass mit den beiden Auslasskanälen zu verbinden. Zwischen den beiden Durchgangsbereichen ist somit zwangsweise ein vergleichsweise dünnes Lenkelement vorzusehen, das zwischen zwei Stellungen hin- und herpendeln kann. Demgegenüber weist ein gattungsgemäßes Drehküken für Weichen lediglich einen Durchgangskanal auf, der zum Verbinden des Eingangskanals mit den anzuwählenden zwei Ausgangskanälen derart verstellt werden muss, dass sich die Durchströmungsrichtung in dem einzigen Durchgangskanal für die beiden Stellungen umkehrt.

Nachteilig bei entsprechenden Dichtungssystemen ist jedoch, dass Dichtungsverschleiß auftreten kann, wobei die entsprechenden Dichtungen zum Teil abgerieben werden. Da das Dichtungsmaterial üblicherweise nicht aus dem selben Werkstoff wie das zu fördernde Schüttgut hergestellt werden kann, führt der Abrieb der Dichtung zur Verunreinigung des Fördergutes. Bei sehr hochwertigen bzw. hochreinen Fördergütern ist dieser Abrieb nachteilig bzw. häufig sogar unzulässig. Für derartige Spezialanwendungen werden Weichen eingesetzt, die einen möglichst engen Spalt zwischen dem Küken und dem Gehäuse aufweisen, um somit die Leckageverluste zu reduzieren.

Konstruktiv werden sehr hohe Anforderungen an die Genauigkeit und Führung der Bauteile gestellt, damit unter allen Betriebszuständen der festgelegte Spalt erhalten bleibt und es nicht zu einer materiellen Berührung und möglicherweise zum Fressen bzw. Abrieb kommt. Die Realisierung vergleichsweise enger Spalte zwischen dem Küken und dem Gehäuse erfordert somit eine sehr aufwendige, toleranzarme Herstellung des Kükens als auch des Gehäuses, was zu einer wirtschaftlich ungünstigen Herstellung entsprechender Weichen führt.

Darüber hinaus führen die derzeit realisierbaren Spalte vor allem bei unter relativ hohen Druckdifferenzen arbeiten Kükenweichen zu inakzeptablen Leckageverlusten. Dies kann beispielsweise zu Funktionsstörungen des Fördervorgangs führen, was mit erheblichem Aufwand gegebenenfalls durch zusätzliche, dosierte Einspeisung von Fördergas unmittelbar nach der Weiche kompensiert werden muss. Möglicherweise werden bei entsprechenden Weichen nachgeschaltete, dichtende verschlussorgane notwendig, was ebenfalls zu einer Erhöhung des Aufwands führt.

### Aufgabe und Vorteile der Erfindung

Aufgabe der Erfindung ist es demgegenüber, eine Weiche zum Verzweigen von Schüttgutströmen vorzuschlagen, die die Nachteile des Standes der Technik nicht aufweist und eine optimale Abdichtung des Drehkükens auch ohne zusätzliche Berührungsdichtungselemente erlaubt.

Diese Aufgabe wird, ausgehend von einer Weiche der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Weiche insbesondere dadurch aus, dass das Drehküken und/oder das Gehäuse wenigstens eine mindestens eine Labyrinth-Dichtungsnut umfassende Labyrinth-Dichtungsanordnung aufweist.

In einer besonderen Variante der Erfindung ist die Labyrinth-Dichtungsnut des Drehkükens weitgehend durchgängig um wenigstens eine Öffnung des Durchgangskanals angeordnet. In besonderen Anwendungsfällen ist eine wenigstens einmal unterbrochene, im Allgemeinen um die Öffnung des Durchgangskanals angeordnete Labyrinth-Dichtungsnut denkbar, beispielsweise werden besondere Abschnitte des Drehkükens mit zusätzlichen, entsprechenden Labyrinth-Dichtungsnuten realisiert. Vorteil bei diesen Varianten der Erfindung ist, dass lediglich zwei Labyrinth-Dichtungsanordnungen, d.h. jeweils eine Anordnung pro Öffnung des Durchgangskanals, zur Verwirklichung einer umfassend abgedichteten Einkanalweiche benötigt wird.

Alternativ oder in Kombination zu den vorgenannten Varianten der Erfindung kann die Labyrinth-Dichtungsnut des Gehäuses weitgehend durchgängig um wenigstens eine der Anschlussöffnungen angeordnet werden. Entsprechend der vorgenannten Varianten ist auch hierbei eine wenigstens einmal unterbrochene bzw. eine nicht-geschlossen ausgebildete Labyrinth-Dichtungsnut denkbar, die an besonderen Abschnitten des Gehäuses möglicherweise zusätzlich angeordnet ist.

Mit Hilfe einer erfindungsgemäßen Labyrinth-Dichtungsanordnung kann in vorteilhafter Weise eine berührungsfreie Dichtung zwischen dem Drehküken und dem Gehäuse realisiert werden, d.h. ohne dass hierbei ein zusätzliches, separates Dichtungselement zu verwenden ist, das einem Abrieb unterliegt. Im Gegensatz zu einer Berührungsdichtung, bei der sich die Dichtungsflächen berühren und im Allgemeinen gegeneinander gepresst sind, wird bei einer berührungsfreien Dichtung gemäß der Erfindung eine Berührung zwischen den Dichtflächen vollständig verhindert. Vielmehr wird gemäß der Erfindung die Dichtungswirkung durch den Strömungswiderstand des abzudichtenden Stoffes mittels dem freien Spalt mit Labyrinth-Dichtungsanordnung realisiert.

In vorteilhafter Weise wird bei einer Labyrinth-Dichtungsanordnung bzw. einer Labyrinthspalt-Dichtungsanordnung der Druck des Fluids in einer Kammer, Erweiterung, Ausnehmung oder dergleichen durch Wirbelbildung und Drosselung abgeschwächt, was beispielsweise bei einer mehrkammerumfassenden Labyrinthdichtung zum stufenweisen Druckabfall von Kammer zu Kammer führt.

Gegebenenfalls kann die Labyrinth-Dichtungsanordnung durch eine Anformung, Belegung, Einlage, u.s.w. gebildet werden, die vorzugsweise aus dem Werkstoff des Drehkükens bzw. Gehäuses oder vergleichbarem Werkstoff besteht. Hierbei oder anderweitig wird in einer bevorzugten Ausführungsform der Erfindung die Labyrinth-Dichtungsanordnung als Ausnehmung, Kammer, insbesondere als die Labyrinth-Dichtungsnut, im Drehküken bzw. Gehäuses ausgebildet. Mit Hilfe einer entsprechenden Ausnehmung bzw. Nut wird die erfindungsgemäße Dichtung ohne weiteres, separates bzw. zusätzliches Dichtungsbauelement realisierbar. Hierbei ist von Vorteil, dass in besonders einfacher Weise mit dem Verzicht auf ein Berührungsdichtungselement mit absoluter Sicherheit es zu keiner Verunreinigung bzw. Beeinträchtigung des Schüttgutstromes bzw. Förderfluids durch Abrieb oder dergleichen führt und zugleich eine vorteilhafte Dichtwirkung realisierbar ist. Gemäß der Erfindung wird hierdurch das Gehäuse gegenüber dem Drehküken wirkungsvoll abgedichtet, so dass Leckagen entscheidend reduziert bzw. vollständig oder nahezu verhindert werden können.

Vorteilhafterweise sind mehrere, nebeneinander angeordnete Labyrinth-Dichtungsnuten vorgesehen. Beispielsweise sind je Dichtung circa drei bis zehn oder mehr Dichtungsnuten vorgesehen. Jede Nut führt zu einem Druckabfall, so dass die Dichtungswirkung mit zunehmender Anzahl an Nuten verbessert wird. In vorteilhafterweise wird die Anzahl der Dichtungsnuten an den Aufwand zur Realisierung entsprechender Nuten angepasst.

In einer vorteilhaften Ausführungsform der Erfindung ist das Gehäuse derart ausgebildet, dass dieses jeweils wenigstens eine Labyrinth-Dichtungsanordung um jede Anschlussöffnung herum angeordnet aufweist. Bei diesen Ausführungsformen sind demzufolge mindestens drei entsprechende Labyrinth-Dichtungsanordnungen vorhanden, so dass zwischen zwei Anschlussöffnungen mindestens zwei Labyrinth-Dichtungsanordnungen vorgesehen sind. Hierbei wird in vorteilhafter Weise zusätzlich die dritte Anschlussöffnung, die am Fördervorgang nicht beteiligt ist, ebenfalls abgedichtet, so dass die Dichtungswirkung vor allem zwischen den entsprechenden Anschlussöffnungen weiter verbessert wird, was die Funktionssicherheit der erfindungsgemäßen Weiche zusätzlich erhöht.

In einer besonderen Weiterbildung der Erfindung ist wenigstens eine Zufuhröffnung eines Zufuhrkanals zum Zuführen eines geeigneten Spaltfluids in den Bereich des Spalts vorgesehen. Durch das Zuführen eines Spaltfluids in den Spalt zwischen Gehäuse und Küken kann in vorteilhafter Weise ein Spülen der Weiche realisiert werden. Beispielsweise wird wenigstens in einer Dreh- bzw. Verstellphase des Drehkükens Spaltfluid dem Spalt zugeführt. Möglicherweise kann nahezu kontinuierlich und/oder während des gesamten Fördervorganges Spaltfluid dem Spalt zugeführt werden.

Durch das Zuführen des Spaltfluids in den Spalt gemäß der Erfindung kann in vorteilhafter Weise beispielsweise relativ feines Fördergut aus dem Bereich zwischen Drehküken und Gehäuse in den Durchlasskanal bzw. in einen an einer Anschlussöffnung angeordnetem Förderkanal transportiert bzw. zurückgeblasen werden. Mit Hilfe dieser Maßnahme wird ein Ausströmen des Förderfluids und/oder ein Entweichen eines Teils des Schüttgutstromes weitesgehend verhindert. Generell ist eine entsprechende Zuführöffnung zum Zuführen eines Spaltfluids in den Bereich des Spalts bei einer weiche nach dem Anspruch 1 von Vorteil.

In einer vorteilhaften Ausführungsform der Erfindung weist die Labyrinth-Dichtungsnut die zufuhröffnung auf. Durch diese Maßnahme wird die Labyrinth-Dichtungsnut als Verteilernut zum Verteilen des Spaltfluids zumindest über die gesamte Länge der Nut bzw. in vorteilhafter Weise um den Umfang der Öffnung des Durchgangskanals bzw. um die Anschlussöffnung herum ausgebildet.

Vorteilhafterweise ist ein Druck des Spaltfluids größer als ein Druck des Förderfluids, so dass sicher zu stellen ist, dass kein Förderfluid bzw. Schüttgut durch den Spalt in den Zwischenraum zwischen Gehäuse und Drehküken gelangen kann.

Gegebenenfalls besteht das Spaltfluid im Wesentlichen aus einem inerten bzw. reaktionsträgen Stoff. Beispielsweise wird handelsüblicher Stickstoff oder dergleichen als Spaltfluid verwendet.

In einer besonderen Weiterbildung der Erfindung entspricht eine Zusammensetzung des Spaltfluids im Wesentlichen einer Zusammensetzung des Förderfluids. Mit Hilfe dieser Maßnahme wird in vorteilhafterweise eine Verunreinigung des Förderfluids und/oder des zu befördernden Schüttgutstromes weitestgehend ausgeschlossen.

Vorzugsweise können zahlreiche, voneinander beabstandete Zufuhröffnungen um eine Anschlussöffnung und/oder eine Öffnung des Durchgangskanals herum angeordnet werden. Beispielsweise umfasst eine Labyrinth-Dichtungsnut entsprechend zahlreiche Zufuhröffnungen. Grundsätzlich kann mittels einer entsprechenden Zuführung eines Spaltfluids in den Bereich des Spalts ein Fluidvorhang oder dergleichen zur weitestgehenden Abschirmung bzw. Abdichtung des Spaltes realisiert werden.

In einer bevorzugten Ausführungsform ist eine maximale Weite des Spaltes zwischen Gehäuse und Drehküken kleiner bzw. gleich 5/10 Millimeter, vorzugsweise kleiner bzw. gleich 3/10 Millimeter. Gerade in Kombination mit der erfindungsgemäßen Labyrinth-Dichtungsanordnung hat sich in der Praxis gezeigt, dass ein entsprechender Spalt eine besonders vorteilhafte Ausführungsform der Erfindung darstellt.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Schnittdarstellung durch eine erfindungsgemäße Einkanalweiche in einer ersten Position,
- Figur 2: eine schematische Schnittdarstellung der erfindungsgemäßen Einkanalweiche in einer zweiten Position,
- Figur 3: ein schematisch dargestellter, vergrößerte Ausschnitt einer Labyrinthdichtung gemäß der Erfindung,
- Figur 4: eine schematische, perspektivische, teilweise geschnittene Darstellung der erfindungsgemäßen Einkanalweiche,
- Figur 5: ein schematisches, perspektivisch dargestelltes Drehküken gemäß der Erfindung und
- Figur 6: das Drehküken gemäß Figur 5 in Draufsicht.

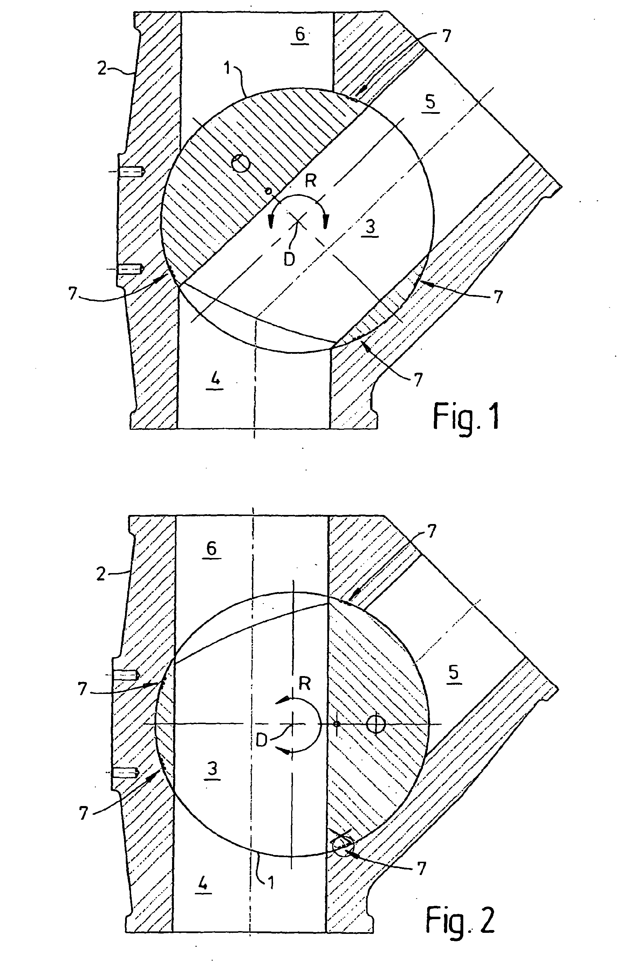

In Figur 1 ist in geschnittener Darstellung eine Einkanalweiche gemäß der Erfindung mit einem zylindrischen Drehküken 1 und einem entsprechend angepassten Gehäuse 2 aufgeführt. Anstelle eines zylindrischen Drehkükens im zylindrischen Gehäuse kann auch eine andere angepasste Formgebung, wie z.B. spährische Formgebung verwendet werden. Das Drehküken 1 befindet sich in einer ersten Position, so dass ein Durchgang mittels einem Kanal 3 von einer ersten Anschlussleitung 4 zu einer zweiten Anschlussleitung 5 verwirklicht wird.

In Figur 2 ist eine zweite Position des zylindrischen Drehkükens 3 gemäß der Erfindung dargestellt, wobei der Kanal 3 eine Verbindung zwischen der Anschlussleitung 4 und einer dritten Anschlussleitung 6 ermöglicht. Die Verstellung des zylindrischen Drehkükens 3 erfolgt mittels einer Drehung um eine im Wesentlichen senkrecht zum Kanal 3 angeordnete Drehachse D, wobei sich das Drehküken 3 in Drehrichtungen R drehen kann.

Gemäß der Erfindung umfasst das zylindrische Gehäuse 2 und/oder das zylindrische Drehküken 1 eine Labyrinth-Dichtungsanordnung 7. Aus Gründen der Übersichtlichkeit ist in Figur 1 und 2 lediglich das Drehküken 3 mit der Dichtung 7 gemäß der Erfindung aufgeführt.

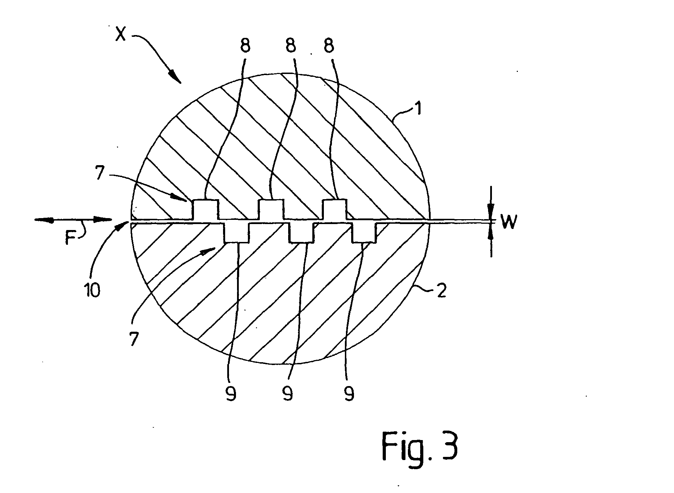

Im Ausschnitt "X" der Figur 3 ist dagegen eine Ausführungsform schematisch dargestellt, bei der sowohl das Drehküken 1 als auch das Gehäuse 2 eine Labyrinthdichtung 7 aufweisen. Mit Hilfe der Figur 3 wird deutlich, dass die aufgeführte Dichtung 7 jeweils aus drei Nuten 8 bzw. 9 verwirklicht ist. In vorteilhafter Weise sind die Nuten 8 des Drehkükens in Strömungsrichtung F versetzt zu den Nuten 9 angeordnet. Eine Anordnung bei der die Nuten 8 und 9 gegenüberliegend angeordnet sind ist ebenfalls denkbar.

In Figur 3 wird darüber hinaus deutlich, dass das Drehküken 1 vom Gehäuse 2 beabstandet ist und hierdurch ein zwischen Gehäuse 2 und Drehküken 1 realisierter Spalt 10 mit einer Spaltweite W ausgebildet wird. Ein nicht näher dargestelltes Fördergas strömt gemäß dem Pfeil F in den Spalt 10 hinein und wird mittels der Nuten 8, 9 verwirbelt, so dass in vorteilhafter Weise eine berührungsfreie Dichtung 7 realisiert wird.

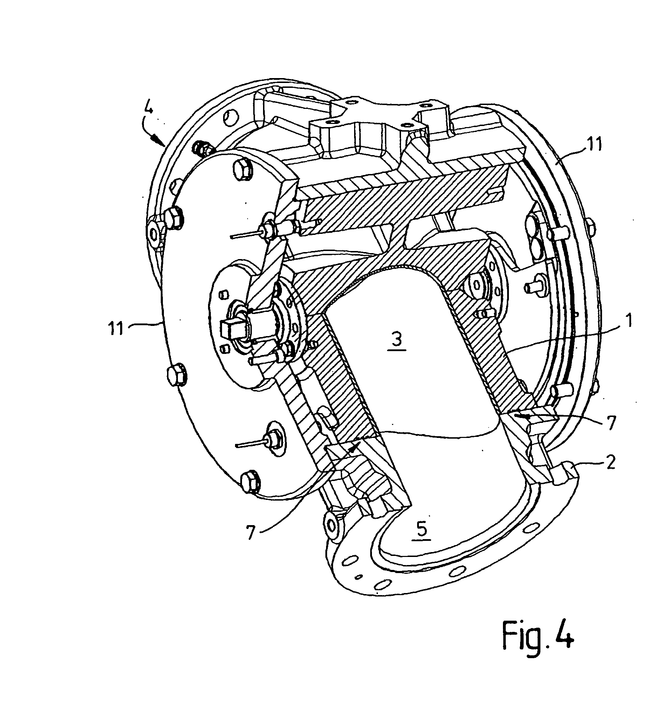

Gemäß Figur 4 ist die Einkanalweiche in perspektivischer, teilweise geschnittener Darstellung aufgeführt. Hierbei wird deutlich, dass die Einkanalweiche zwei Seitendeckel 11 insbesondere zur Lagerung des Drehkükens 1 aufweist. Gegebenenfalls kann eine nicht näher dargestellte, ggf. auch elastische Dichtung zwischen wenigstens einem Seitendeckel 11 und dem Gehäuse 2 und/oder dem Drehküken 3 vorgesehen werden. Alternativ oder in Kombination hierzu kann wenigstens ein Seitendeckel 11 mittels einer Labyrinthdichtung 7 gemäß der Erfindung gegenüber dem Gehäuse 2 und/oder dem Drehküken 1 abgedichtet werden.

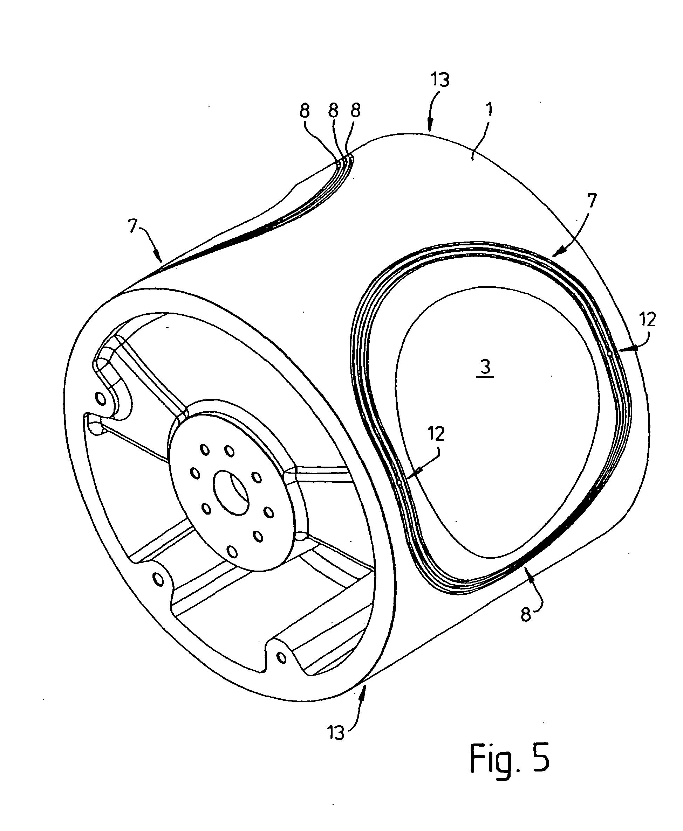

In Figur 5 wird die räumliche Ausbildung des Drehkükens 1 einschließlich der beiden Dichtungen 7 zum Abdichten der Öffnungen des Durchgangskanals 3 verdeutlicht. Die Nuten 8 der Dichtungen 7 können beispielsweise mittels spanabhebender, abrasiver oder vergleichbarer Verfahren vergleichsweise einfach, vorzugsweise mittels elektronisch steuerbarer Werkzeugmaschinen, hergestellt werden.

Gemäß Figur 5 weist eine mittlere Nut 8 der Dichtung 7 zwei Spülöffnungen 12 auf, durch die mittels einem nicht näher dargestellten Spülkanal des Drehkükens 1 ein Spülfluid bzw. handelsüblicher Stickstoff in den Spalt 10 eingebracht werden kann. Hierdurch wird insbesondere die mittlere Nut 8 als Verteilerkanal zum Verteilen des Spülfluids um die Öffnung des Durchgangskanals 3 des Drehkükens 1 ausgebildet.

Generell können die Nuten 8 bzw. 9 wie dargestellt als durchgängige oder in nicht näher dargestellter Weise als wenigstens einmal unterbrochene Nuten 8, 9 ausgebildet werden.

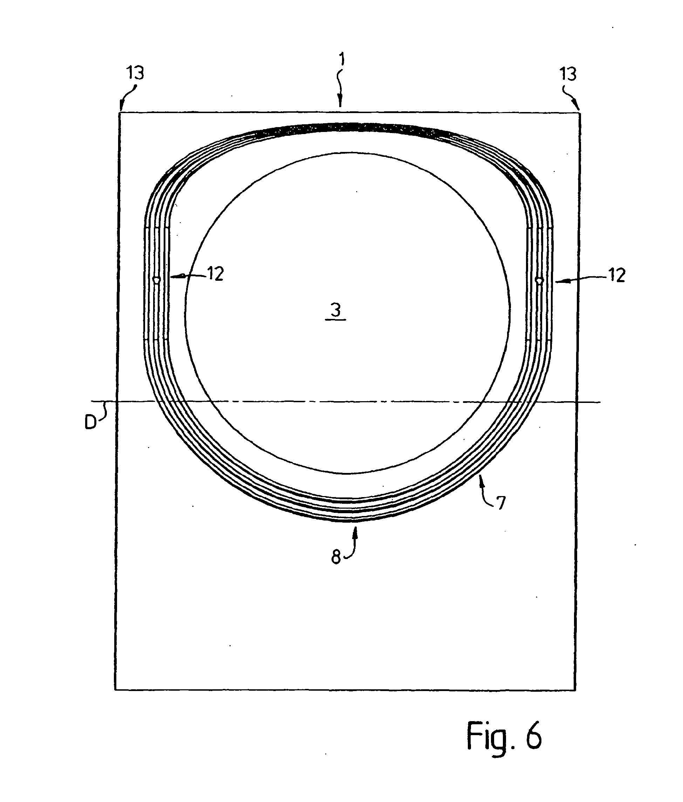

Figur 6 zeigt das Drehküken 1 in Draufsicht. Beispielsweise sind die Nuten 8 und/oder 9 wie in Figur 5, 6 konzentrisch zueinander angeordnet.

In nicht näher dargestellter Weise können weitere Dichtungen beispielsweise im Randbereich 13 der Mantelfläche des Drehkükens 1, zwischen den dargestellten Dichtungen 7 des Drehkükens, zwischen den Dichtungen 7 des Gehäuses 2, u.s.w. vorgesehen werden. Denkbar ist die Verwirklichung eines Dichtungssystems oder dergleichen mittels einem Netz bzw. Geflecht aus auf dem Gehäuse 2 und/oder Drehküken 1 angeordneten Nuten 8, 9 oder dergleichen.

Eine Dichtungsvariante umschließt das Küken seitlich am Umfang und vermeidet das Überströmen des Fördergases in den Bereich der seitlichen Deckel, so dass nur über den Spalt am Kükenumfang Leckagen auftreten, eine andere Variante umschließt die jeweiligen Förderkanäle komplett.

Die Erfindung ist nicht auf das dargestellte und beschriebene Ausführungsbeispiel beschränkt. Sie umfasst auch vielmehr alle Varianten im Rahmen der Schutzrechtsansprüche.

### Bezugszeichenliste:

- 1: Drehküken
- 2: Gehäuse
- 3: Kanal
- 4: Anschlussleitung
- 5: Anschlussleitung
- 6: Anschlussleitung
- 7: Dichtung
- 8: Nut
- 9: Nut
- 10: Spalt
- 11: Seitendeckel
- 12: Spülöffnung
- 13: Rand

- D: Drehachse
- F: Strömungsrichtung
- R: Drehrichtung
- W: Spaltweite
- X: Ausschnitt

## Patentansprüche

1. Weiche insbesondere zum Verzweigen von Schüttgutströmen, mit einem in einem stationären, vorzugsweise drei Anschlussöffnungen (4, 5, 6) umfassenden Gehäuse (2) angeordneten Drehküken (1), das in einer ersten Position eine Verbindung eines ersten Anschlussöffnungspaares (4, 5) und durch Verdrehen in eine zweite Position eine Verbindung eines zweiten Anschlussöffnungspaares (4, 6) realisiert, wobei zwischen dem Drehküken (1) und dem Gehäuse (2) ein Spalt (10) zur berührungsfreien Anordnung des Drehkükens (1) im Gehäuse (2) ohne zusätzliches Berührungsdichtungselement vorgesehen ist, **dadurch gekennzeichnet, dass** das Drehküken (1) und/oder das Gehäuse (2) wenigstens eine Labyrinth-Dichtungsanordnung (7) aufweist, wobei die Labyrinth-Dichtungsanordnung (7) wenigstens eine Labyrinth-Dichtungsnut (8, 9) umfasst, und dass die Labyrinth-Dichtungsnut (8) des Drehkükens (1) weitgehend durchgängig um wenigstens eine Öffnung eines Durchgangskanals (3) angeordnet ist, und/oder dass die Labyrinth-Dichtungsnut (9) des Gehäuses (2) weitgehend durchgängig um wenigstens eine der Anschlussöffnungen (4, 5, 6) angeordnet ist.

2. Weiche nach Anspruch 1, **dadurch gekennzeichnet, dass** mehrere, nebeneinander angeordnete Labyrinth-Dichtungsnuten (8, 9) vorgesehen sind.

3. Weiche nach einem der vorgenannten Ansprüche, **dadurch gekennzeichnet, dass** wenigstens eine Zufuhröffnung (12) eines Zufuhrkanals zum Zuführen eines Spaltfluids in den Spalt (10) zwischen Drehküken (1) und Gehäuse (2) vorgesehen ist.

4. Weiche nach einem der vorgenannten Ansprüche, **dadurch gekennzeichnet, dass** die Labyrinth-Dichtungsnut (8, 9) die Zufuhröffnung (12) aufweist.

5. Weiche nach einem der vorgenannten Ansprüche, **dadurch gekennzeichnet, dass** ein Druck des Spaltfluids größer als ein Druck des Förderfluids ist.

6. Weiche nach einem der vorgenannten Ansprüche, **dadurch gekennzeichnet, dass** eine Zusammensetzung des Spaltfluids im Wesentlichen einer Zusammensetzung des Förderfluids entspricht.

7. Weiche nach einem der vorgenannten Ansprüche, **dadurch gekennzeichnet, dass** eine maximale Weite (W) des Spaltes (10) kleiner gleich fünf Zehntel-Millimeter (W ≤ 5/10 mm) und vorzugsweise kleiner gleich drei Zehntel-Millimeter (W ≤ 3/10 mm) ist.

## Claims

1. Switch, especially for branching off bulk material flows, with a rotary plug (1) arranged in a fixed housing (2) comprising preferably three connection openings (4, 5, 6), which rotary plug in a first position establishes a connection between a first pair of connection openings (4, 5) and by rotation into a second position establishes a connection between a second pair of connection openings (4, 6), whereby a gap (10) is provided between the rotary plug (1) and the housing (2) for the contact-free arrangement of the rotary plug (1) in the housing (2) without an additional contact sealing element, **characterised in that** the rotary plug (1) and/or the housing (2) comprises at least one labyrinth sealing arrangement, whereby the labyrinth sealing arrangement (7) comprises at least one labyrinth sealing groove (8, 9), and **in that** the labyrinth sealing groove (8) of the rotary plug (1) is arranged to be mainly continuous about at least one opening of a through channel (3), and/or **in that** the labyrinth sealing groove (9) of the housing (2) is arranged to be mainly continuous about at least one of the connection openings (4, 5, 6).

2. Switch according to claim 1, **characterised in that** several labyrinth sealing grooves (8, 9) are provided arranged adjacent to one another.

3. Switch according to one of the preceding claims, **characterised in that** at least one feed opening (12) ofa feed channel is provided for feeding a gap fluid into the gap (10) between the rotary plug (1) and the housing (2).

4. Switch according to one of the preceding claims, **characterised in that** the labyrinth sealing groove (8, 9) comprises the feed opening (12).

5. Switch according to one of the preceding claims, **characterised in that** the pressure of the gap fluid is greater than the pressure of the conveyor fluid.

6. Switch according to one of the preceding claims, **characterised in that** the composition of the gap fluid corresponds essentially to the composition of the conveyor fluid.

7. Switch according to one of the preceding claims, **characterised in that** a maximum width (W) of the gap (10) is smaller than or equal to five tenths of a millimetre (W ≤ 5/10 mm) and is preferably smaller than or equal to three tenths of a millimetre (W ≤ 3/10 mm).

## Revendications

1. Dispositif d'aiguillage, en particulier pour la dérivation de courants de produits en vrac, comportant un boisseau tournant (1) agencé dans un boîtier (2) fixe comprenant de préférence trois ouvertures de raccordement (4, 5, 6), lequel boisseau réalise une liaison d'un premier couple d'ouvertures de raccordement (4, 5) dans une première position et une liaison d'un deuxième couple d'ouvertures de raccordement (4, 6) par rotation dans une deuxième position, un interstice (10) étant prévu entre le boisseau tournant (1) et le boîtier (2) pour l'agencement sans contact du boisseau tournant (1) dans le boîtier (2) sans élément d'étanchéité de contact supplémentaire,
**caractérisé en ce que** le boisseau tournant (1) et/ou le boîtier (2) présente(nt) au moins un agencement de joint à labyrinthe (7), ledit agencement de joint à labyrinthe (7) comprenant au moins une rainure de joint à labyrinthe (8, 9), et **en ce que** la rainure de joint à labyrinthe (8) du boisseau tournant (1) est agencée de manière essentiellement ininterrompue autour d'au moins une ouverture d'un canal de passage (3) et/ou **en ce que** la rainure de joint à labyrinthe (9) du boîtier (2) est agencée de manière essentiellement ininterrompue autour d'au moins une des ouvertures de raccordement (4, 5, 6).

2. Dispositif selon la revendication 1,
**caractérisé en ce qu'**il est prévu plusieurs rainures de joint à labyrinthe (8, 9) agencées les unes à côté des autres.

3. Dispositif selon l'une des revendications précédentes,
**caractérisé en ce qu'**il est prévu au moins une ouverture d'alimentation (12) d'un canal d'alimentation pour amener un fluide d'interstice dans l'interstice (10) entre le boisseau tournant (1) et le boîtier (2).

4. Dispositif selon l'une des revendications précédentes,
**caractérisé en ce que** la rainure de joint à labyrinthe (8, 9) présente l'ouverture d'alimentation (12).

5. Dispositif selon l'une des revendications précédentes,
**caractérisé en ce qu'**une pression du fluide d'interstice est supérieure à une pression du fluide de transport.

6. Dispositif selon l'une des revendications précédentes,
**caractérisé en ce qu'**une composition du fluide d'interstice correspond essentiellement à une composition du fluide de transport.

7. Dispositif selon l'une des revendications précédentes,
**caractérisé en ce qu'**une largeur maximale (W) de l'interstice (10) est inférieure ou égale à cinq dixièmes de millimètres (W ≤ 5/10 mm) et de préférence inférieure ou égale à trois dixièmes de millimètres (W ≤ 3/10 mm).
